# EUROPÄISCHE PATENTSCHRIFT

(11) **EP 4 042 042 B1**
(45) Veröffentlichungstag und Bekanntmachung des Hinweises auf die Patenterteilung: **24.05.2023**
(21) Anmeldenummer: 20792523.1
(22) Anmeldetag: 06.10.2020
(51) Int. Cl.: F16H 57/04, E05B 17/08, E05B 81/06, E05B 81/34, H02K 5/10, H02K 7/116

(54) **KLEINSTANTRIEB EINER KRAFTFAHRZEUGTECHNISCHEN ANTRIEBSEINHEIT**
MICRODRIVE OF AN AUTOMOTIVE DRIVE UNIT
MICRO-ENTRAÎNEMENT D'UNE UNITÉ D'ENTRAÎNEMENT D'AUTOMOBILE

(30) Priorität: 11.10.2019 DE 102019127458
(43) Veröffentlichungstag der Anmeldung: 17.08.2022
(73) Patentinhaber: Kiekert AG, 42579 Heiligenhaus (DE)
(72) Erfinder: LINNENBRINK, Jörg, 42327 Wuppertal (DE); KOCH, Daniel, 45276 Essen (DE); ZIGANKI, Andreas, 40822 Mettmann (DE)
(86) Internationale Anmeldenummer: PCT/DE2020/100867
(87) Internationale Veröffentlichungsnummer: WO 2021/069028

(56) Entgegenhaltungen:
- CH-A- 324 818
- DE-A1- 4 201 373
- DE-A1-102018 101 892
- FR-A- 739 204
- US-B1- 6 376 949

## Beschreibung

Die Erfindung betrifft einen Kleinstantrieb einer kraftfahrzeugtechnischen Antriebseinheit, insbesondere einen Teil eines Kraftfahrzeugschlosses, mit einem Elektromotor mit einer Abtriebswelle und einem auf der Abtriebswelle befindlichen Zahnrad, bevorzugt einer Schnecke eines Schneckengetriebes, wobei zwischen dem Elektromotor und dem Zahnrad ein Mittel zum Ableiten eines Schmiermittels angeordnet ist.

Kraftfahrzeugtechnische Schließsysteme, wie sie in Türen, Klappen, Hauben oder Deckeln eingesetzt werden, sind heutzutage vielfach mit elektrischen Antrieben versehen, die den Komfort des Kraftfahrzeugs erhöhen. So ist es beispielsweise möglich, mittels einer Funkfernbedienung das Schließsystem zu verriegeln oder entriegeln oder zum Beispiel auch zuzuziehen oder zu entsperren, um nur einige wenige Beispiele für den Einsatz elektrischer Antriebe im Kraftfahrzeugschloss zu nennen. Führen die elektrischen Antriebe im Kraftfahrzeugschloss zu einer Komforterhöhung, so muss stets eine Langlebigkeit der Schließsysteme über die gesamte Lebensdauer des Kraftfahrzeuges gewährleistet sein. Um insbesondere die mittels der elektrischen Antriebe angetriebenen Zahnräder, Hebel und/oder Schieber langfristig, geräuscharm und leichtgängig arbeiten zu lassen, werden die Schließsysteme und im Besonderen die beweglichen Bauteile des Schließsystems mit Schmiermitteln verbaut.

Können die Schmiermittel, wie beispielsweise Fette und/oder Öle einerseits ein geräuscharmes, langlebiges und leichtgängiges Ineinandergreifen der Schlossbestandteile gewährleisten, so ist das Eindringen der Schmiermittel in das Innere des elektrischen Antriebs bzw. des Elektromotors möglichst zu vermeiden. Gelangen Schmiermittel in das Motorinnere, so können sich im Laufe der Zeit Schmiermittel im Bereich des Kollektors und/oder Kommutators und/oder der Bürsten absetzen, wodurch Beschädigungen an den elektrischen Antrieben entstehen können. Um das Eindringen von Schmiermitteln in das Motorinnere zu vermeiden, sind verschiedene Lösungsansätze aus dem Stand der Technik bekannt geworden.

Die DE 2 004 167 A1 offenbart einen Elektromotor mit einem Wälzlager und eine für das Wälzlager vorgesehene Ölnebelschmierung. Dabei wird die Motorwelle in einem Wälzlager geführt und zwischen zwei Lagerdeckeln in einem Lagerschild gehalten. Mittels einer Düse wird Öl in Richtung des Wälzlagers geführt, durch das Wälzlager hindurch geleitet und über den weiteren Lagerdeckel und eine Drainageöffnung wieder aus dem Lagerbereich abgeleitet. Eine Scheibe mit Labyrinthkammern wirkt dabei mit einem Dichtring zusammen, so dass das Öl bzw. der Ölnebel nicht in das Innere des Motors gelangen kann.

Aus der DE 103 24 849 B4 ist ein Elektromotor mit einer Wellendichtung zur Abdichtung einer Motorwelle des Elektromotors bekannt geworden. Schmiermittel, die über Zahnlücken in der Welle hinter eine Dichtscheibe des Motors gelangen, werden zielgerichtet abgeführt. Dazu ist hinter der äußeren Dichtscheibe, die fest mit dem Motorgehäuse verbunden ist, eine rotierende Dichtscheibe angeordnet. Die rotierende Dichtscheibe weist eine Rillenstruktur auf, die die Schmiermittel zielgerichtet radial nach außen leiten. Über einen Ringspalt werden die Schmiermittel dann über Durchbrüche in der äußeren Dichtscheibe abgeführt. Ein Eindringen von Schmiermitteln in das Innere des Motors kann somit verhindert werden.

Eine weitere Form des Ableitens der Schmiermittel ist aus der US 6,376,949 B1 bekannt geworden. Hierbei ist auf der Abtriebswelle des Motors eine kreisförmige Schleuderscheibe angeordnet, die zumindest einen Öldichtring des Motors übergreift. Schmiermittel, die an die Schleuderscheibe gelangen, werden mittels Rotation und Fliehkraft abgeleitet und gelangen in eine im Deckel des Motors angeordnete Auffangwanne, durch die die Schmiermittel dann über eine Drainageleitung abgeleitet werden.

Als gattungsbildender Stand der Technik beschreibt die DE 10 2018 101 892 A1 ein Mittel zum Führen und/oder Binden eines Schmiermittels, wobei das Mittel zum Führen und/oder Binden zwischen dem Elektromotor und dem Abtriebsmittel angeordnet ist. Offenbart sind Ableitmittel, die das Schmiermittel einerseits von der Motorwellenöffnung ableiten, das heißt zielgerichtet von der Motorwellenöffnung wegführen oder das Schmiermittel binden.

Die aus dem Stand der Technik bekannten Dichtsysteme zum Ableiten von Schmiermitteln aus dem Inneren des Elektromotors sind konstruktiv aufwändig und bedingen eine zum Teil hohe Zentrifugalkraft, um das Öl oder Fett abzuschleudern. Diese Zentrifugalkraft liegt nicht in allen Fällen in ausreichender Form vor oder kann funktionsbedingt nicht zur Verfügung gestellt werden. Hier setzt die Erfindung an.

Aufgabe der Erfindung ist es, einen verbesserten Kleinstantrieb einer kraftfahrzeugtechnischen Antriebseinheit bereitzustellen. Insbesondere ist es Aufgabe der Erfindung, Schmiermittel aus dem Bereich einer Öffnung der Abtriebswelle des elektrischen Antriebs sicher abzuleiten.

Die Lösung der Aufgabe erfolgt durch die Merkmale des unabhängigen Patentanspruchs 1. Vorteilhafte Ausgestaltungen der Erfindung sind in den Unteransprüchen angegeben. Es wird darauf hingewiesen, dass die im Folgenden beschriebenen Ausführungsbeispiele nicht beschränkend sind, vielmehr sind beliebige Variationsmöglichkeiten, der in der Beschreibung und den Unteransprüchen beschriebenen Merkmale, möglich.

Gemäß dem Patentanspruch 1 wird die Aufgabe der Erfindung dadurch gelöst, dass ein Kleinstantrieb einer kraftfahrzeugtechnischen Antriebseinheit, insbesondere ein Teil eines Kraftfahrzeugschlosses, bereitgestellt wird, mit einem Elektromotor mit einer Abtriebswelle und einem auf der Abtriebswelle befindlichen Zahnrad, bevorzugt einer Schnecke eines Schneckengetriebes, wobei zwischen dem Elektromotor und dem Zahnrad ein Mittel zum Ableiten eines Schmiermittels angeordnet ist, und wobei das Mittel zum Ableiten eine das Ableiten unterstützende Oberflächenstruktur aufweist. Vielfach sind es die Adhäsionskräfte, die ein Ableiten des Schmiermittels vom Ableitmittel verhindern. Dabei wird durch den Elektromotor eine Drehbewegung in das Zahnrad und somit das Ableitmittel eingeleitet, diese Drehbewegung führt dazu, dass Zentrifugalkräfte auf das Schmiermittel am Zahnrad und am Mittel zum Ableiten wirken. Diese Zentrifugalkraft kann nicht in allen Fällen in ausreichendem Maße zur Verfügung gestellt werden, um das Schmiermittel vollständig vom Ableitmittel zu lösen und in einen unkritischen Bereich abzuführen. Durch die Beeinflussung der Oberfläche am Ableitmittel können diese Adhäsionskräfte zwischen dem Schmiermittel und dem Ableitmittel verringert werden. Geringere Adhäsionskräfte führen dann dazu, dass geringere Zentrifugalkräfte zum Ableiten und Abführen bzw. Wegschleudern des Schmiermittels benötigt werden. Somit kann ein sicheres Ableiten des Schmiermittels auch bei geringen Zentrifugalkräften gewährleistet werden. Unterstützend heißt hierbei, dass die Oberfläche des Ableitmittels eine die Adhäsion verringernde Beschichtung oder Oberflächenbehandlung erfahren hat.

Kleinstantriebe in kraftfahrzeugtechnischen Antriebseinheiten kommen dort zum Einsatz, wo aufgrund des geringen Platzangebots kleinstbauende Motoren eingesetzt werden, die über zumindest eine Getriebestufe eine Bewegung initialisieren. Die Bewegung, die mittels des Kleinstantriebs im Kraftfahrzeug erzeugt wird, kann beispielsweise in einem Stellmittel, einer Zuziehhilfe, einer Verriegelungseinheit oder einem Kraftfahrzeugschloss initialisiert werden. Der Kleinstantrieb ist somit nicht an einen Einsatzort gebunden, sondern kann überall dort eingesetzt werden, wo Kleinstantriebe im Kraftfahrzeugschloss zur Erzielung von Bewegungen zum Einsatz kommen. Je nach Konsistenz und Inhaltstoffen der Schmiermittel, wobei insbesondere Schmierfette zum Einsatz kommen, können auch Öle aus dem Schmiermittel austreten, die dann vom Ableitmittel vom elektrischen Antrieb weg und abzuführen sind.

Neben den genannten Motorkomponenten wie Wicklungen und Isolationen werden darüber hinaus natürlich auch die weiteren Motorkomponenten wie Kollektor, Kommutator, Bürsten und Kontakte vor einer Beschädigung durch Schmiermittel und/oder Schmiermittelbestandteile geschützt. Die eindringenden Substanzen können Isolierungen begünstigen oder herbeiführen und/oder zu Kurzschlüssen führen, was durch den erfindungsgemäßen Aufbau des Ableitmittels sicher verhindert wird.

Wird im Sinne der Erfindung von einem Kraftfahrzeugschloss gesprochen, so sind damit solche Kraftfahrzeugschlösser umfasst, die einerseits elektrisch betätigbar sind und andererseits beweglich am Kraftfahrzeug angeordnete Bauteile im Betrieb des Kraftfahrzeugs fixieren und/oder halten. Die Kraftfahrzeugschlösser können beispielsweise in Seitentüren, Schiebetüren, Klappen, Hauben und/oder Abdeckungen eingesetzt sein, ebendort wo schwenkbeweglich oder verschieblich gelagerte Bauteile am Kraftfahrzeug angeordnet sind. Vorstellbar ist es auch, das Kraftfahrzeugschloss in einer Rückenlehne eines Sitzes anzuordnen.

Das Kraftfahrzeugschloss weist dabei ein Gesperre auf, welches eine Drehfalle und zumindest eine Sperrklinke aufweist. Vorzugsweise ist zumindest eine Sperrklinke in einer Ebene mit der Drehfalle angeordnet und ist in der Lage, im Zusammenspiel mit einem Schlosshalter die Drehfalle in einer Position zu sperren bzw. zu halten. Bei einem geöffneten Gesperre weist ein Einlaufmaul der Drehfalle in Richtung eines Schlosshalters, wobei es durch eine Relativbewegung zwischen Schlosshalter und Drehfalle zu einem Verschwenken der Drehfalle kommt. Die Sperrklinke ist in der Regel in Richtung der Drehfalle vorgespannt, so dass die Sperrklinke bei einem Erreichen einer Rastposition mit der Drehfalle in Eingriff gelangt. Hierbei können eine Vorrastposition oder eine Hauptrastposition des Gesperres einnehmbar sein.

Die elektrische Antriebseinheit wirkt mittelbar oder unmittelbar mit dem Gesperre zusammen. Dabei ist ein Elektromotor, vorzugsweise ein Gleichstrommotor vorgesehen, der in einem Gehäuse des Kraftfahrzeugschlosses lagesicher aufgenommen ist. Der Elektromotor treibt über eine Abtriebswelle ein Abtriebsmittel an, wobei das Abtriebsmittel beispielsweise ein Zahnrad oder eine Schnecke eines Schneckentriebs sein kann. Das Abtriebsmittel wiederum kann in eine Getriebestufe eingreifen oder eine Getriebestufe bilden und mit weiteren Bauteilen, wie Hebeln, Schiebern oder auch einem Schneckenrad zusammenwirken. Somit sind mittels des elektrischen Antriebs Funktionsstellungen des Kraftfahrzeugschlosses einstellbar bzw. initiierbar. Im Kraftfahrzeugschloss können ein oder mehrere Elektromotoren in Antriebseinheiten zum Einsatz kommen. Dabei kann die Antriebseinheit zum Beispiel mittelbar mit dem Gesperre zusammenwirken und das Gesperre entsperren, das Schließsystem verriegeln, so dass ein Entsperren unterbindbar ist, das Gesperre bzw. die Drehfalle von einer Vorrastposition in eine Hauptrastposition überführen oder zum Beispiel eine Kindersicherung einlegen, um nur einige beispielhafte Funktionen im Schließsystem zu beschreiben, die aber stets mittelbar Einfluss auf das Gesperre haben. Einerseits kann das Entsperren ausgelöst, verhindert oder ein Schließen des Gesperres initialisiert werden.

Das Mittel zum Ableiten ist dabei fest mit der Abtriebswelle bzw. der Motorwelle verbunden und kann einstückig mit dem Zahnrad ausgebildet sein. Die Abtriebswelle weist dabei bevorzugt einen D-förmigen Querschnitt auf, der mit einer kooperierenden Öffnung im Zahnrad bzw. Ableitmittel zusammenwirkt. Bevorzugt ist das Mittel zum Ableiten einstückig an das Zahnrad angeformt. Vorstellbar ist es aber auch, dass das Ableitmittel als separates Bauteil an der Motorwelle und/oder dem Zahnrad befestigt ist. Bevorzugt ist das Zahnrad eine Schnecke eines Schneckentriebs, da sich hierdurch in vorteilhafter Weise günstige Untersetzungsverhältnisse zum Antreiben von Stellmitteln, Hebeln, Schiebern und/oder weiteren Getriebestufen erzielen lassen.

In einer vorteilhaften Weiterbildung der Erfindung ist das Mittel zum Ableiten aus einem metallischen Werkstoff oder aus Kunststoff gebildet. Metallische Werkstoffe bieten den Vorteil, dass die Oberflächen mit vielfachen Verfahren bearbeitbar sind und wiederum günstige Oberflächen zur Verfügung stellen, um adhäsionsmindernde Mittel zu binden. Wie vorstehend beschrieben, kann das Zahnrad einstückig mit dem Mittel zum Ableiten ausgebildet sein, es ist aber auch vorstellbar, ein Verbundwerkstoffbauteil einzusetzen, wobei beispielsweise das treibende Zahnrad aus einem Kunststoff gebildet ist, wohingegen das Mittel zum Ableiten aus einem metallischen Werkstoff besteht. Diese Verbundwerkstoffbauteile können wiederum als einstückige Bauteile hergestellt sein, es besteht aber auch die Möglichkeit, das Zahnrad mit dem Ableitmittel form-, kraft- oder stoffschlüssig zu verbinden. Somit besteht die Möglichkeit, das Zahnrad aus einem für eine Reibung günstigen Werkstoff herzustellen und darüber hinaus das Ableitmittel aus einem metallischen Werkstoff auszubilden, der für ein sicheres Ableiten des Schmiermittels günstige Werkstoffeigenschaften aufweist. Natürlich ist es auch vorstellbar, das Mittel zum Ableiten aus einem Kunststoff herzustellen, was wiederum zu einer kostengünstigen konstruktiven Lösung der Erfindung führen würde.

Die vielfachen Ausgestaltungsvarianten des Ableitmittels sind in der DE 10 2018 101 892 A1 offenbart, die hiermit vollumfänglich zum Offenbarungsgehalt erklärt wird. Ausgehend von diesen zumeist rotationssymmetrisch aufgebauten konstruktiven Ausgestaltungen zum Ableiten des Schmiermittels kommt der erfindungsgemäßen Oberflächenstruktur eine besondere Bedeutung zu. Die Beeinflussung der Oberfläche zur Erzielung einer Oberflächenstruktur, die eine Adhäsion verringert und somit ein Ableiten des Schmiermittels begünstigt, wirkt dahingehend unterstützend, dass neben dem Leiten des abzuführenden Schmiermittels die zum Wegschleudern oder Abführen benötigten Zentrifugalkräfte verringert werden. Somit kann ein sicheres Ableiten des Schmiermittels aus dem Bereich der Motorengehäuseöffnung für die Motorwelle gewährleistet werden. Wird das Mittel zum Ableiten aus einem metallischen Werkstoff gebildet, so kann eine mechanische Glättung vorteilhaft sein, wohingegen bei einem Einsatz eines Kunststoffs als Mittel zum Abführen eine Glättung der Werkzeugwand eines Kunststoffspritzgießwerkzeugs eine adhäsionsvermindernde Wirkung erzielen kann. Glättung kann auch bedeuten, dass ein Polieren der Oberfläche vorgenommen worden ist.

In einer vorteilhaften Ausgestaltungsvariante ist die Oberflächenstruktur eine Beschichtung, insbesondere eine Nanobeschichtung. Nanobeschichtungen können dazu führen, dass die Schmiermittel leichter abgeführt werden. Zusätzlich kann eine Oberflächenbehandlung, insbesondere eine mechanische Glättung, vorgesehen sein, um eine günstige Oberflächenstruktur zu erzielen. Das Mittel zum Ableiten wird bevorzugt als rotationssymmetrisches Ableitmittel ausgebildet und kann in einer Ausführungsform als Schleuderring bezeichnet werden. Die Oberfläche des Schleuderrings sollte so glatt wie möglich sein, insbesondere Polierglatt und gegebenenfalls zusätzlich epimalisiert. Insbesondere kann der Schleuderring epilamisiert sein, um eine Ölmigration durch einen Spalt zwischen der Welle und dem Schleuderring zu vermeiden. Epilamisierte Oberflächen weisen den Vorteil auf, dass sie ölabweisend wirken.

Erfindungsgemäß ist mittels der Oberflächenstruktur eine Kapillarwirkung im Ableitmittel erzielbar. Das Ableitmittel kann dabei so gestaltet sein, dass das abzuführende Schmiermittel bzw. das aus dem Schmiermittel austretende Öl durch Kapillareffekte zum äußeren Rand des Schleuderrings geleitet wird. Am äußeren Rand der Scheibe bzw. des Schleuderrings wirkt bei einer Rotation des Schleuderrings aufgrund des größeren Radius eine höhere Zentrifugalkraft, so dass bei einer Motorbetätigung eine Ölansammlung leichter abgeschleudert werden kann. Durch das Zusammenspiel der erfindungsgemäßen Oberfläche und/oder eine Kapillarwirkung können Öle aus den Schmiermitteln des Zahnrads bzw. der nachgeschalteten Getriebe nicht in den Antriebsmotor migrieren und so zu einer Verpastung des Kollektors führen. Durch den erfindungsgemäßen Aufbau der Oberflächenstruktur wird das Risiko einer Migration reduziert.

Wie bereits vorstehend erläutert, umschließt das Ableitmittel die Abtriebswelle bevorzugt scheibenförmig und ist verdrehfest mit der Abtriebswelle verbunden.

Scheibenförmige Abtriebsmittel bieten den Vorteil, dass bei einem rotationssymmetrischen Aufbau geringe Kräfte auf die Motorwelle wirken. Bei einem unsymmetrischen Aufbau kann es zu Unwuchten kommen, die das Geräuschverhalten und/oder die Langlebigkeit des Elektromotors beeinträchtigen können. Durch die Rotationssymmetrie kann somit einerseits die Langlebigkeit gesteigert und andererseits ein gleichmäßiges Abführen erzielt werden. Durch die feste Anbindung des Ableitmittels kann weiterhin ein konstruktiv einfacher Aufbau für das Ableitmittel und gleichzeitig ein mit dem Zahnrad identisches Umlaufen des Ableitmittels gewährleistet werden. Auf eine separate Lagerung und/oder Befestigung des Ableitmittels in der Antriebseinheit kann somit verzichtet werden.

Eine weitere vorteilhafte Ausgestaltung der Erfindung ergibt sich dann, wenn die Oberflächenstruktur als scharfkantige Verrippung im scheibenförmigen Ableitmittel ausgebildet ist. Scharfkantige Oberflächenstrukturen können das Abführen des Öls und/oder Schmiermittels ebenfalls im positiven Sinne beeinflussen. Dabei können die Rippen strahlenförmig und/oder schräg auslaufend am Ableitmittel ausgebildet sein. Bevorzugt wird eine Rotationssymmetrie angestrebt, wobei die in das Ableitmittel bzw. den Schleuderring 2, 3, 4 oder mehr Rippen eingeformt sein können.

Weitere Vorteile können sich dadurch ergeben, dass die Oberflächenstruktur auf einem glockenförmigen, konischen und/oder mit einer umlaufenden Mulde versehenen Schleuderring aufgebracht ist. Je nach Einsatzgebiet des Kleinstantriebs und/oder Drehzahl des Motors und/oder Temperatureinfluss und/oder Orientierung der Motor-, Zahnrad- bzw. Getriebeanordnung können unterschiedliche konstruktive Ausgestaltungen der Ableitmittel und der auf dem Ableitmittel aufgebrachten Oberflächenstruktur vorteilhaft sein.

Nachfolgend wird die Erfindung unter Bezugnahme auf die anliegenden Zeichnungen anhand bevorzugter Ausführungsbeispiele näher erläutert. Es gilt jedoch der Grundsatz, dass die Ausführungsbeispiele die Erfindung nicht beschränken, sondern lediglich unterschiedliche Alternativen darstellen. Die dargestellten Merkmale können einzeln oder in Kombination mit weiteren Merkmalen der Patentansprüchen einzeln oder in Kombination ausgeführt werden.

Es zeigt:
- Figur 1: eine prinzipielle Darstellung eines Kraftfahrzeugschlosses mit einer Antriebseinheit und einer Getriebestufe und einem glockenförmigen Schleuderring;
- Figuren 2a-2c: alternative Ausführungsformen von Ableitmitteln in kraftfahrzeugtechnischen Antriebseinheiten und
- Figur 3: eine Ansicht aus Richtung des Pfeils III der Figur 2a auf das Antriebsmittel.

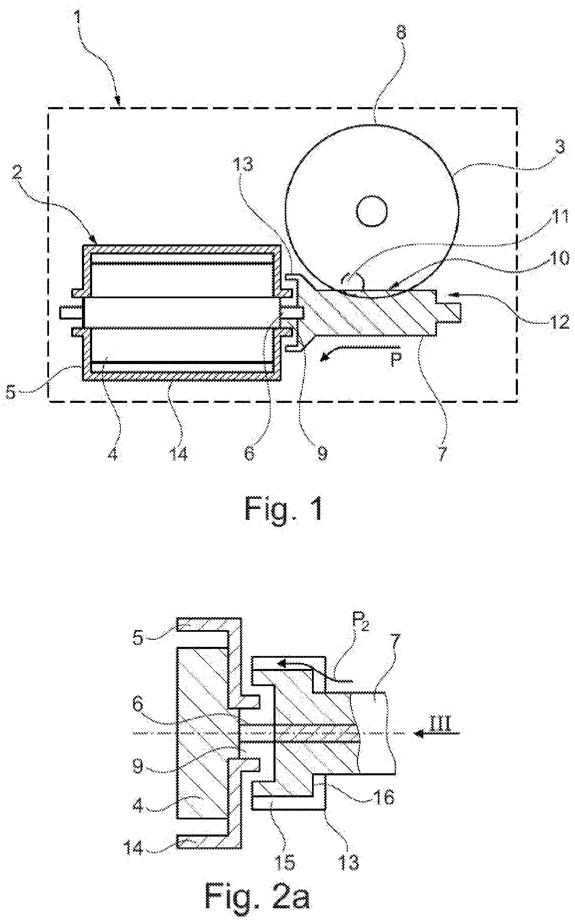

In der Figur 1 ist als Strichlinie und beispielhaft ein Kraftfahrzeugschloss 1 prinzipiell dargestellt. Das Kraftfahrzeugschloss 1 weist eine Antriebseinheit 2 mit einem Schneckenradgetriebe 3 auf, wobei das Schneckenradgetriebe mittelbar mit einem nicht dargestellten Gesperre zusammenwirkt. Die Antriebseinheit 2 weist einen Elektromotor 4 auf, der formschlüssig in einem Schlossgehäuse 5 aufgenommen ist. Eine Abtriebswelle 6 ragt aus dem Elektromotor 4 heraus und trägt ein Antriebsmittel 7, insbesondere ein Zahnrad 7 in Form einer Schnecke, wobei das Zahnrad 7 mit einem weiteren Zahnrad 8, zum Beispiel einem Schneckenzahnrad, zusammenwirkt. Das Schneckenzahnrad 8 wiederum kann unmittelbar mit einem Hebel, Zahnrad und/oder Schiebeelement zusammenwirken.

Wie weiterhin aus der Figur 1 zu erkennen ist, ragt die Abtriebswelle 6 aus einer Öffnung 9 des Schlossgehäuses 5 heraus. Im Eingriffsbereich 10 zwischen Schneckenzahnrad 8 und Ableitmittel 7 ist vorzugsweise Schmiermittel 11 anordbar, so dass nach einem Zusammenbau des Kraftfahrzeugschlosses 1 günstige Reibverhältnisse in der Getriebestufe 12 erzielbar sind.

Kommt es nun aufgrund von zum Beispiel Temperatureinflüssen und/oder aufgrund von Reibungswärme zu einem Fließen des Schmiermittels 11, so kann sich bei einer entsprechenden Drehrichtung des Antriebsmittels ein Schmiermittelfluss in Richtung des Pfeils P ergeben. Bevorzugt werden Fette als Schmiermittel 11 eingesetzt. Bei höheren Temperaturen können diese Schmiermittel 11 sich verflüssigen und bei entsprechender Drehrichtung des Antriebsmittels 7 und/oder Lage der Antriebseinheit 2 im Kraftfahrzeug in den Öffnungsbereich 9 der Abtriebswelle 6 gelangen. Durch die erfindungsgemäße Ausbildung des Ableitmittels 13 als glockenförmiger Schleuderring kann das Schmiermittel 9 von der Öffnung 9 weggeleitet werden. Dabei übergreift das Ableitmittel 13 das Schlossgehäuse 5 zumindest im Öffnungsbereich 9 der Antriebseinheit 2.

Das Ableitmittel 13 umschließt die im Gehäuse 5 angeordnete Motoraufnahme zumindest so weit, dass ein Ableiten des Schmiermittels 11 in einem Bereich außerhalb der Öffnung 9 erfolgt. Durch den erfindungsgemäßen Aufbau des Ableitungsmittels 13 kann somit kein Schmiermittel 11 in den Öffnungsbereich 9 der Abtriebswelle 6 gelangen.

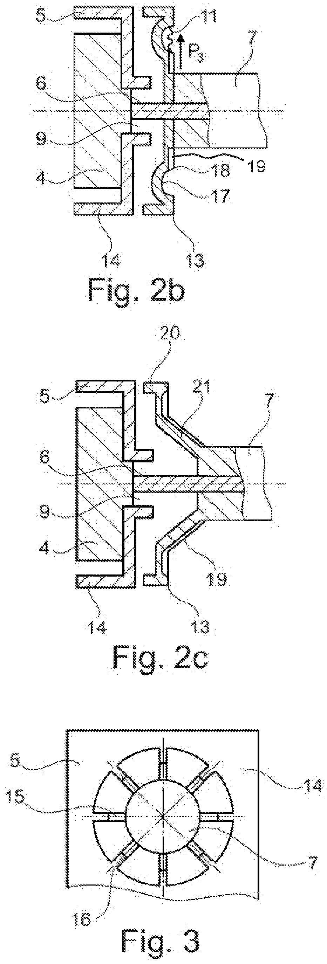

In den Figuren 2a, 2b und 2c sind Detailansichten zwischen dem Ableitungsmittel 13 und dem Öffnungsbereich 9 Der Motoraufnahme 14 wiedergegeben. Die Figur 2a zeigt eine Schnittdarstellung durch das Zahnrad 7 und das Ableitungsmittel 13, wobei das Zahnrad 7 wie auch das Ableitungsmittel 13 auf der Abtriebswelle 6 verdrehfest montiert sind. Zahnrad 7 und Ableitungsmittel 13 sind in diesem Ausführungsbeispiel einstückig ausgebildet. Dabei umschließt das Ableitungsmittel 13 die Öffnung 9 glockenförmig, wobei Führungsnuten 15 in das Ableitungsmittel 13 eingeformt sind, die einen Abtransport des Schmiermittels 11 in Richtung des Pfeils P2 ermöglichen. In der Figur 3 ist eine Ansicht auf das Zahnrad 7 sowie das Ableitungsmittel 13 aus Sicht des Pfeils III aus der Figur 2a wiedergegeben. Zu erkennen ist der rotationssymmetrische Aufbau des Ableitungsmittels 13, mit acht Führungsnuten 15, die sich umfänglich am Ableitungsmittel 13 erstrecken. Die Führungsnuten 15 ermöglichen es hierbei, das Schmiermittel gezielt und mit Unterstützung einer behandelten Oberfläche 16 der Führungsnuten 15 das Schmiermittel gezielt abzuführen. Die Oberfläche 16 der Führungsnuten 15 kann dabei beschichtet und/oder geglättet ausgeführt sein. In jedem Fall weist die Führungsnut 15 eine Oberflächenstruktur auf, die einen Abtransport des Schmiermittels erleichtern. Zusätzlich können die Nuten 15 eine derartige Weite aufweisen, dass sich ein Kapillareffekt einstellt, der den Transport des abzuführenden Schmiermittels entlang des Weges P2 zusätzlich unterstützt. Auch wenn hier beispielhaft Nuten 15 genannt sind, so können auch Rippen ausgebildet sein, wobei die Rippen vorzugsweise scharfe Kanten und/oder Ecken aufweisen.

In der Figur 3 ist eine alternative Ausführungsform eines Ableitungsmittels 13 wiedergegeben. Die Figur 2b zeigt wiederum einen Schnitt im Bereich der Öffnung 9 der Motoraufnahme 14 sowie eine prinzipielle Darstellung eines Ableitungsmittels 13 als separates Bauteil, montiert auf der Abtriebswelle 6. Das Ableitungsmittel 13 weist in dieser Ausführungsform eine umlaufende Mulde 17 auf, mittels der ein Abfangen des Öls ermöglichbar ist. Dabei gelangt das Öl bzw. Schmiermittel durch Zentrifugalkraft in Richtung des Pfeils P3 in die Mulde 17 und kann dort gesammelt und/oder wiederum mittels Zentrifugalkraft abgeschleudert werden. Das Ableitungsmittel 13 weist eine Oberflächenstruktur 18 auf, die einen unterstützenden Abtransport des Öls bzw. Schmiermittels ermöglicht. Beispielsweise kann die Oberfläche 18 eine Nanobeschichtung aufweisen, die eine Adhäsion des Öls verringert und somit geringe Fliehkräfte notwendig sind, um das abzuführende Öl abzuleiten. Führungsnuten 19, die vorzugsweise sternförmig am Ableitungsmittel 13 angeordnet sind, leiten das Schmiermittel 11 in den Bereich der Mulde 17. Dabei kommt der Oberflächenbeschaffenheit der Führungsnuten 19 eine entscheidende Rolle zu, da durch zum Beispiel eine epimalisierte und/oder geglättete und/oder polierte Oberfläche eine Kapillarwirkung in den Führungsnuten 19 unterstützt wird.

In der Figur 2c ist wiederum ein Ableitungsmittel 13 wiedergegeben, wobei das Ableitungsmittel 13 einstückig mit der Abtriebswelle bzw. Schnecke 7 ausgebildet ist. Antriebsmittel, Zahnrad bzw. Schnecke 7 werden als Synonyme verwendet und sind auf der Abtriebswelle 6 verdrehfest montiert. Das Abtriebsmittel 13 ist in dieser Ausgestaltungsform zumindest bereichsweise konisch ausgebildet und weist Führungsnuten 19 auf. Die Führungsnuten 19 können sich spiralförmig entlang des Ableitungsmittel 13 erstrecken oder wie in diesem Ausführungsbeispiel dargestellt, sich sternförmig zum Rand 20 des Ableitungsmittels 13 hin erstrecken. Es können zwei, drei oder mehr symmetrisch im Ableitungsmittel 13 angeordnete Führungsnuten 19 ausgebildet sein, die wiederum eine zielgerichtete Führung des Schmiermittels und einen Abtransport ermöglichen. Die Oberfläche 21 der Führungsnut 19 kann geglättet ausgebildet sein und/oder eine Kapillarwirkung hervorrufen, so dass ein unterstützendes Ableiten des Öls ermöglichbar ist.

Durch den erfindungsgemäßen Aufbau des Ableitungsmittels 13 kann ein sicheres Ableiten des Öls gewährleistet werden, so dass das Öl sicher von der Öffnung 9 ferngehalten werden kann.

### Bezugszeichenliste

- 1: Kraftfahrzeugschloss
- 2: Antriebseinheit
- 3: Schneckenradgetriebe
- 4: Elektromotor
- 5: Schlossgehäuse
- 6: Abtriebswelle
- 7, 8: Antriebsmittel, Zahnrad, Schnecke
- 9: Öffnung
- 10: Eingriffsbereich
- 11: Schmiermittel
- 12: Getriebestufe
- 13: Ableitungsmittel
- 14: Motorgehäuse
- 15, 19: Führungsnuten
- 16, 18, 21: Oberfläche
- 17: Mulde
- 20: Rand

- P, P2, P3: Pfeil

## Patentansprüche

1. Kleinstantrieb einer kraftfahrzeugtechnischen Antriebseinheit (2), insbesondere ein Teil eines Kraftfahrzeugschlosses, mit einem Elektromotor (4) mit einer Abtriebswelle (6) und einem auf der Abtriebswelle (6) befindlichen Zahnrad (7, 8), bevorzugt einer Schnecke (7, 8) eines Schneckengetriebes (3, wobei zwischen dem Elektromotor (4) und dem Zahnrad (7, 8) ein Mittel zum Ableiten (13) eines Schmiermittels (11) angeordnet ist, **dadurch gekennzeichnet, dass** das Mittel zum Ableiten (13) des Schmiermittels (11) eine das Ableiten unterstützende Oberflächenstruktur aufweist, wobei die das Ableiten unterstützende Oberflächenstruktur derart ausgebildet ist, das Schmiermittel (11) mittels Kapillarwirkung abzuleiten.

2. Kleinstantrieb nach Anspruch 1, **dadurch gekennzeichnet, dass** das Mittel zum Ableiten (13) aus einem metallischen Werkstoff oder einem Kunststoff gebildet ist.

3. Kleinstantrieb nach Anspruch 2, **dadurch gekennzeichnet, dass** die Oberflächenstruktur eine Beschichtung, insbesondere eine Nanobeschichtung, ist.

4. Kleinstantrieb nach einem der Ansprüche 1 bis 3, **dadurch gekennzeichnet, dass** die Oberflächenstruktur mittels einer Oberflächenbehandlung, insbesondere einer mechanischen Glättung bei metallischen Werkstoffen oder einer Glättung der Werkzeugwand eines Kunststoffspritzgießwerkzeugs, erzielbar ist.

5. Kleinstantrieb nach einem der Ansprüche 1 bis 4, **dadurch gekennzeichnet, dass** das Ableitmittel (13) die Abtriebswelle (6) scheibenförmig umschließt und verdrehfest mit der Abtriebswelle (6) verbunden ist.

6. Kleinstantrieb nach einem der Ansprüche 1 bis 5, **dadurch gekennzeichnet, dass** die Oberflächenstruktur als scharfkantige Verrippung im scheibenförmigen Ableitmittel (13) ausgebildet ist.

7. Kleinstantrieb nach einem der Ansprüche 1 bis 6, **dadurch gekennzeichnet, dass** die Oberflächenstruktur als zumindest bereichsweise umlaufende Mulde (17) ausgebildet ist.

8. Kleinstantrieb nach einem der Ansprüche 1 bis 7, **dadurch gekennzeichnet, dass** die Oberflächenstruktur auf einem glockenförmigen Scheibenring aufgebracht ist.

9. Kleinstantrieb nach einem der Ansprüche 1 bis 8, **dadurch gekennzeichnet, dass** die Oberflächenstruktur auf einem konischen Scheibenring aufgebracht ist.

## Claims

1. Microdrive of a motor vehicle drive unit (2), in particular a part of a motor vehicle lock, comprising an electric motor (4) having an output shaft (6) and a gearwheel (7, 8) located on the output shaft (6), preferably a worm (7, 8) of a worm gear (3), with a means for discharging (13) a lubricant (11) being arranged between the electric motor (4) and the gear (7, 8), **characterized in that** the means for discharging (13) the lubricant (11) has a surface structure supporting the discharge, the surface structure supporting the discharge being designed to discharge the lubricant (11) by means of capillary action.

2. Microdrive according to claim 1, **characterized in that** the means for discharging (13) is formed from a metal material or a plastics material.

3. Microdrive according to claim 2, **characterized in that** the surface structure is a coating, in particular a nanocoating.

4. Microdrive according to any of claims 1 to 3, **characterized in that** the surface structure can be achieved by means of a surface treatment, in particular mechanical smoothing in metal materials or smoothing the tool wall of a plastic injection molding tool.

5. Microdrive according to any of claims 1 to 4, **characterized in that** the discharge means (13) surrounds the output shaft (6) in the manner of a disk and is connected to the output shaft (6) for conjoint rotation.

6. Microdrive according to any of claims 1 to 5, **characterized in that** the surface structure is formed as sharp-edged ribbing in the disk-shaped discharge means (13).

7. Microdrive according to any of claims 1 to 6, **characterized in that** the surface structure is designed as an at least partially circumferential trough (17).

8. Microdrive according to any of claims 1 to 7, **characterized in that** the surface structure is applied to a bell-shaped disk ring.

9. Microdrive according to any of claims 1 to 8, **characterized in that** the surface structure is applied to a conical disk ring.

## Revendications

1. Micro-entraînement d'une unité d'entraînement (2) pour la technique de l'automobile, en particulier pièce d'une serrure de véhicule automobile, comportant un moteur électrique (4) comportant un arbre de sortie (6) et une roue dentée (7, 8) se trouvant sur l'arbre de sortie (6), de préférence une vis sans fin (7, 8) d'un engrenage à vis sans fin (3), un moyen permettant l'évacuation (13) d'un lubrifiant (11) étant disposé entre le moteur électrique (4) et la roue dentée (7, 8), **caractérisé en ce que** le moyen permettant l'évacuation (13) du lubrifiant (11) présente une structure de surface facilitant l'évacuation, la structure de surface facilitant l'évacuation étant conçue de manière à évacuer le lubrifiant (11) par action capillaire.

2. Micro-entraînement selon la revendication 1, **caractérisé en ce que** le moyen permettant l'évacuation (13) est formé d'un matériau métallique ou d'une matière plastique.

3. Micro-entraînement selon la revendication 2, **caractérisé en ce que** la structure de surface est un revêtement, en particulier un nanorevêtement.

4. Micro-entraînement selon l'une des revendications 1 à 3, **caractérisé en ce que** la structure de surface peut être obtenue au moyen d'un traitement de surface, en particulier d'un lissage mécanique pour des matériaux métalliques ou d'un lissage de la paroi d'outil d'un outil de moulage par injection de matière plastique.

5. Micro-entraînement selon l'une des revendications 1 à 4, **caractérisé en ce que** le moyen d'évacuation (13) entoure l'arbre de sortie (6) sous forme de disque et est relié à l'arbre de sortie (6) de manière solidaire en rotation.

6. Micro-entraînement selon l'une des revendications 1 à 5, **caractérisé en ce que** la structure de surface est conçue en tant que nervurage à arêtes vives dans le moyen d'évacuation (13) en forme de disque.

7. Micro-entraînement selon l'une des revendications 1 à 6, **caractérisé en ce que** la structure de surface est conçue en tant que cuvette périphérique (17) au moins dans certaines régions.

8. Micro-entraînement selon l'une des revendications 1 à 7, **caractérisé en ce que** la structure de surface est appliquée sur une bague de disque en forme de cloche.

9. Micro-entraînement selon l'une des revendications 1 à 8, **caractérisé en ce que** la structure de surface est appliquée sur une bague de disque conique.
